# EUROPEAN PATENT APPLICATION

(11) **EP 1 584 491 A2**
(43) Date of publication of application: **12.10.2005**
(21) Application number: 05007497.0
(22) Date of filing: 06.04.2005
(51) Int. Cl.: B60B 7/00, B60B 7/06

(54) **Wheel cover**

(30) Priority: 07.04.2004 DE 102004017554
(71) Applicant: ISE Innomotive Systems Europe GmbH, 51702 Bergneustadt (DE)
(72) Inventor: Löwen, Jacob, 51647 Gummersbach (DE); Kuhlmann, Ralf, 57462 Olpe (DE)
(74) Representative: Rebbereh, Cornelia

(57) **Abstract**

A wheel cover (10) of metal for a wheel (40) with a part (42) that accommodates the tire and an inner part (41) arranged within this part, wherein the wheel cover contains an adapter element (20) for fixing the wheel cover on the inner part (41) and a cover element (30) for at least partially covering the inner part (41), wherein the adapter element (20) is inseparably fixed on the cover element (30).

## Description

The invention refers to a wheel cover of metal for a wheel with a part that accommodates the tire and an inner part arranged within this part, wherein the wheel cover comprises an adapter element for fixing the wheel cover on the inner part and a cover element for at least partially covering the inner part. The invention also pertains to a method for manufacturing such a wheel cover, a cover element for at least partially covering an inner part of a wheel, particularly a wheel disk, of a vehicle, as well as a wheel with such a wheel cover.

Numerous variations of wheel covers are known from the state of the art. Most wheel covers are realized in the form of plastic parts and fixed on a wheel rim with the aid of a steel ring and plastic clips (e.g. DE 44 32 132 A1). This means that a relatively poor connection is produced between the wheel cover and the rim of the wheel. Consequently, such wheel covers are not only easily lost, but also provide no anti-theft protection at all. Due to the utilization of a plastic material, these wheel covers have an appearance with little esthetic appeal, particularly after prolonged use. When the wheel cover is clipped on the rim by means of a steel ring, the enameled surface of the rim may become scratched. In order to improve the hold on the rim and to allow a certain bracing on the rim, plastic wheel covers usually have a cambered shape that can lead to the wheel cover contacting curbstones and uneven roadways such that the wheel cover surface becomes scratched. In addition, a thusly braced wheel cover is more easily lost if a force is exerted thereupon due to the contact with a curbstones or the like.

For example, DE 198 26 060 A1 discloses devices for fixing wheel covers on a wheel for special purposes, wherein an additional central fixing device is provided for securing the wheel cover on the wheel. This wheel cover comprises a primary cover that covers the wheel disk and a disk-shaped secondary cover that covers the center of the primary cover on the outside. The central fixing device is also provided with an adapter that is fixed on at least two wheel mounting bolts and contains an inner support region that abuts the primary cover. Fixing means penetrate the primary cover and connect the secondary cover to the adapter in such a way that the primary cover is held between the support region of a cap and the secondary cover. The different layers of the adapter and the primary cover are firmly held on one another due to the central fixing device. The adapter contains a sleeve-shaped section that bridges the space between the wheel disk and the primary cover. The auxiliary cover is fixed on the adapter by means of snap-in devices formed by elevations and depressions on lugs and hammerheads of the adapter and the secondary cover.

A special method for securing a hubcap is described in WO 03/080367 A1. In this case, a plurality of tubular extensions or cylindrical sleeves is provided for accommodating wheel screws that serve for fixing the cap on the wheel. A special element restricts the axial adjustment of the screws to only two positions, wherein the screws can only be completely removed with a special tool in order to provide a corresponding anti-theft protection.

DE 37 40 909 A1 discloses a screw-mounted hubcap, particularly for a motor bus, that is provided with a lock and holding bars. This hubcap holding arrangement is firmly placed against the walls of the rim flange groove in an open groove between the rim well and the rim flange of the wheel rim. DE 38 35 004 C2 also discloses a hubcap of light metal that is provided with a lock.

Metal-plated hubcaps of plastic with a shape that follows the outside contour of the wheel are disclosed in DE 43 21 057 A1 and DE 102 04 394 A1. These hubcaps are respectively fixed on a wheel with the aid of clipping or bonding means and provided with a cap for covering the wheel hub.

A wheel covering device of transparent plastic is disclosed in DE 101 45 085 A1. Since a transparent plastic is used, the light metal rim is still visible despite the protective covering device. A fixing element for fixing the covering device on the wheel has a barb-like shape and/or is provided with a predetermined breaking point in order to realize an anti-theft protection. Other wheel covers of metallic or non-metallic material with clamping elements integrally formed onto their periphery are disclosed in DE 39 01 542 A1.

DE 695 24 085 T2 discloses a wheel cover retaining system, in which a wheel cover is provided with a plurality of pockets and wheel nuts for securing the wheel and the wheel cover on a vehicle are arranged in the pockets.

An annular wheel cover of stainless steel, aluminum or plastic is known from DE 44 32 132 A1. The stainless steel covers and aluminum covers consist of drawn parts or deep-drawn parts or turned parts. This publication proposes to utilize clips or a combination of screws and bores for connecting the wheel cover to the wheel.

In addition to the conventional deep-drawing or casting methods employed in the manufacture of wheel covers, DE 34 33 185 C2 discloses a method for manufacturing a hubcap of light metal with a sharp-edged, right-angled border, wherein the material thickness of the border is greater than that of the cover disk, and wherein the hubcap consists of a high-grade aluminum sheet and is manufactured in a non-cutting fashion. The hubcap is produced by means of pressing in a pressing tool, wherein the free edge of a round sheet metal disk is initially doubled over by a small angle with the aid of an axially displaceable pressing roller and subsequently compressed into a step formed on the periphery of the chuck by means of a radially displaceable roller tool.

If a wheel cover is provided with clips that engage into the rim, one has to accept the above-described risks of possibly damaging the rim surface or the part accommodating the tire and of easily losing the wheel cover. The installation of the other above-described type of wheel covers that are secured against fast access by means of locks is relatively complicated. A combination of a primary cover, a secondary cover and an adapter in accordance with DE 198 26 060 A1 requires a particularly high installation expenditure, namely because the individual parts need to be installed successively and fixed in an interlocking fashion.

The present invention is based on the objective of disclosing a wheel cover of metal for a wheel with a part that accommodates the tire and an inner part arranged within this part, wherein this wheel cover comprises an adapter element for fixing the wheel cover on the inner part and a cover element for at least partially covering the inner part, and wherein said wheel cover eliminates the above-described disadvantages due to the fact that it can be easily installed while simultaneously protecting the wheel cover from being lost or stolen. With respect to a cover element for at least partially covering the inner part of a wheel, the objective of the invention consists of achieving a high-quality external appearance.

This objective is attained with a wheel cover according to the preamble of Claim 1 in that the adapter element is inseparably fixed on the cover element. With respect to a method for manufacturing a wheel cover according to the preamble of Claim 13, the objective of the invention is attained with the following steps: producing a sheet metal blank with a predetermined contour, forming the sheet metal blank into a cover element by means of hydroforming and connecting a preformed adapter element to the cover element such that a wheel cover is obtained. With respect to an adapter element according to the preamble of Claim 17, the objective of the invention is attained in that the cover element is manufactured by means of hydroforming. Additional developments of the invention are defined in the dependent claims.

The invention proposes a wheel cover that can be directly installed on the part accommodating a tire, particularly a rim, in the form of a single part. It is no longer required to install and interlock several different parts as it is the case, for example, with the method disclosed in DE 198 26 060 A1. In addition, the customary attachment of hubcaps with clips in accordance with the state of the part is also eliminated, wherein this clip-type attachment may lead to the entire wheel cover falling off the wheel as the clamping force of the hubcap and the adapter diminishes, particularly in a hubcap according to DE 198 26 060 A1. The adapter element according to the invention makes it possible to adequately and securely fix the compact wheel cover comprising the adapter element and the cover element on a wheel. The adapter element forms a stable abutment for fixing the wheel cover by means of wheel screws or wheel mounting bolts. In addition, the rigid connection between the adapter element and the cover element secures the wheel cover from being lost, particularly at high vehicle speeds and on uneven roadways, as well as from being stolen, namely without having to provide a lock on the wheel cover. It is advantageous that the adapter element can be simultaneously used for centering the wheel cover relative to the wheel, i.e., for aligning the center of the wheel and the center of the wheel cover relative to one another.

When producing the cover element by means of hydroforming, hydrostatic pressure is exerted upon the sheet metal of the cover element and an exertion of mechanical pressure is prevented. The damages to the surface structure of the wheel cover that regularly occur in the state of the art can be advantageously prevented in this fashion. If the wheel cover surface is damaged during the course of the manufacturing process, its repair not only is almost impossible, but also extremely costly. Surface damages do not occur in hydroforming processes because only the rear side of the cover element is contacted by a die while the front side of the cover element is deformed against the pressure of an active medium. Possible scratches or tool marks on the rear side of the cover element are no longer visible once the wheel cover is installed on the wheel disk. In deep-drawing and pressing methods, for example, in accordance with DE 34 33 185 C2, a texture is produced on both sides of the sheet metal by the forming tool. This leads to a reduced quality of the formed object. When utilizing a hydroforming method, it is also possible to achieve a more favorable drawing ratio β for the sheet metal that may be as high as 2.6 or similar values.

In order to fix the wheel cover on a wheel by means of wheel screws or wheel mounting bolts, the adapter element and the cover element preferably contain through-openings for inserting the wheel screws and/or wheel mounting bolts. The number of through-opening depends on the number of wheel screws or wheel mounting bolts on the respective wheel. For example, three, four, five or six through-openings may be provided. The dimensions of the openings are advantageously adapted to one another and to openings in the inner part of the wheel, particularly a wheel disk, such that the wheel cover is able to optimally cover webs and openings or recesses in the inner part and the wheel disk, respectively. For example, a cast aluminum wheel can be covered in order to conceal the simple, non-finished surface of the cast part with the optically appealing surface of the wheel cover or the cover element, respectively.

The through-openings of the adapter element are preferably arranged radially around the central cambered region. After the installation on the cover element, this cambered region is able to engage into a central opening in the cover element and support itself therein. The through-openings in the cover element are preferably also arranged radially around its center. The through-openings in the adapter element and in the cover element are advantageously adapted to one another with respect to their position and spacing so as to prevent the wheel screws or wheel mounting bolts from jamming.

At least one of the through-openings is preferably realized larger than the other through-openings. The dimensions of the largest opening are preferably chosen such that the head and the collar of a wheel screw or wheel nut fit through the opening. The adjustment of the wheel cover on the wheel is simplified by providing a larger or largest opening. This also makes it possible to push the larger through-opening over a first installed wheel screw or wheel nut and to fix the wheel cover on the wheel. The wheel cover is then properly fixed on the wheel with the remaining wheel mounting bolts, wheel nuts and/or wheel screws that are inserted into the smaller through-openings in the adapter element and thusly fix the adapter element on the inner part of the wheel. A wheel can be initially installed on a vehicle without the wheel cover, in which case the wheel cover is subsequently fixed on the wheel. This makes it possible to prevent damages to the surface of the wheel cover and the cover element, respectively, during the initial installation. In addition, the installer is able to initially install the wheel and then fix the wheel cover on the wheel without requiring a "third hand" as it is frequently the case with wheel covers according to the state of the art.

The adapter element and/or the cover element preferably contains an opening for a valve to be inserted into the rim. In this respect, it is particularly preferred to arrange the opening for a valve to be inserted into the rim opposite of the largest opening in the adapter element and/or the cover element. This makes it possible to still adjust the wheel cover and to achieve a defined fit thereof on the wheel.

Openings or recesses are preferably positioned in the wheel cover such that they are essentially aligned in with openings or recesses in the wheel disk after the wheel cover is installed. Such openings or recesses are provided in the inner part of the wheel, for example, in order to ventilate the brake disks and partly realized in an optically appealing fashion. This design can also be utilized for the wheel cover in order to create the impression of directly looking at the inner part of the wheel. However, the wheel cover also serves for protecting the inner part of the wheel from external damages.

The central region of the cover element preferably contains a depression and/or a recess for inserting a decorative element. The cambered region of the adapter element is advantageously arranged on the rear side of such a recess. This means that the decorative element is secondarily or primarily fixed on the adapter element. A decorative element specified by the customer preferably is or can be fixed in the center of the wheel cover. Such a decorative element may consist of a decorative cap or a plaque that carries the emblem of the respective automobile, on which the wheel cover is installed. The decorative element may be fixed in the depression or recess by means of a plug-type connection, bonding, soldering, clips, at least one mounting element, particularly a screw, a clinch bolt or similar fixing arrangements. At least the rear side of the decorative element contains a pin or a similar element that can be inserted or wedged into an opening in the cover element. It would also be conceivable to bond, solder or weld the decorative element on the cover element.

It is preferred that at least the cover element of the wheel cover consists of steel, particularly stainless steel. It is particularly preferred that both the cover element and the adapter element consist of steel or stainless steel. This makes it possible to achieve a particularly appealing and high-quality optical appearance as well as a superior stability of the wheel cover. If the wheel cover according to the present invention is used on vehicles with steel rims, the optical appearance of said steel rims can be advantageously improved. It is common practice to forgo the purchase of separate light metal rims for winter tires, and the refitting of these tires on the rims for the summer tires is unfeasible due to the associated costs. In such instances, the optical appearance of winter tires fitted on steel rims can be improved with the wheel cover according to the present invention. This applies analogously to aluminum rims that have been damaged, i.e., scratched or otherwise adversely affected.

In order to additionally improve the external appearance of the wheel cover, it may be provided with one or more different surface structures. In this context, it would be possible, in particular, to at least partially polish, brush, frost or otherwise structure the surface of the wheel cover. This means that effects provided on light metal or aluminum rims can also be reproduced on the wheel cover.

In the method according to the invention for manufacturing cover elements according to the invention for the wheel covers, the form cover element is preferably cut to size, particularly punched, along the edges and/or surface area. Due to this measure, the openings provided in the inner part of the wheel may also be arranged in the wheel cover such that they can be covered therewith. The peripheral edges of the cut-to-size cover element are then preferably smoothed (rounded). This is achieved, in particular, by beading the peripheral edges. This eliminates the risk of being injured by these sharp edges and improves the optical appearance of the peripheral edges.

The adapter element is preferably mounted centrally on the formed and cut cover element, particularly by means of one or more soldering or welding spots. In this case, a positive connection is produced, particularly by means of rivets, clinching or penetration joining, particularly machine riveting. The central region of the cover element can be covered with the decorative element as described above in order to conceal the mounting points. The connection between the adapter element and the cover element in the center of the cover element also ensures that these two elements are rigidly held together, namely because the wheel cover is fixed on the wheel around this region and the center consequently is subjected to only slight tensions. It is preferred that the wheel cover can be fixed or installed on the wheel with a prestress, wherein the wheel cover at least partially adjoins the wheel in an edge region (rim flange). It is preferred to arrange the wheel cover such that its periphery has a certain clearance referred to the outer edge of the wheel, wherein the prestress is generated by fixing the wheel cover on the wheel with the aid of the wheel mounting bolts or wheel screws. The aforementioned clearance represents a constructive prerequisite that ensures a calculable prestress in order to prevent the wheel cover from being unintentionally bent during the installation. The clearance may amount, for example, to 3 mm. Fluttering of the wheel cover relative to the wheel can also be advantageously prevented by generating such a prestress.

The invention is described in greater detail below with reference to one embodiment that is illustrated in the figures. The figures show:
- Figure 1: a perspective rear view of a wheel cover according to the invention;
- Figure 2: an exploded view of a wheel with a wheel cover according to Figure 1, namely in the form of a perspective front view;
- Figure 3: a detailed section through the arrangement for fixing the wheel cover on the rim and the wheel disk of a wheel, and
- Figures 4a and 4b: a schematic diagram of the hydroforming process for producing a wheel cover according to the invention.

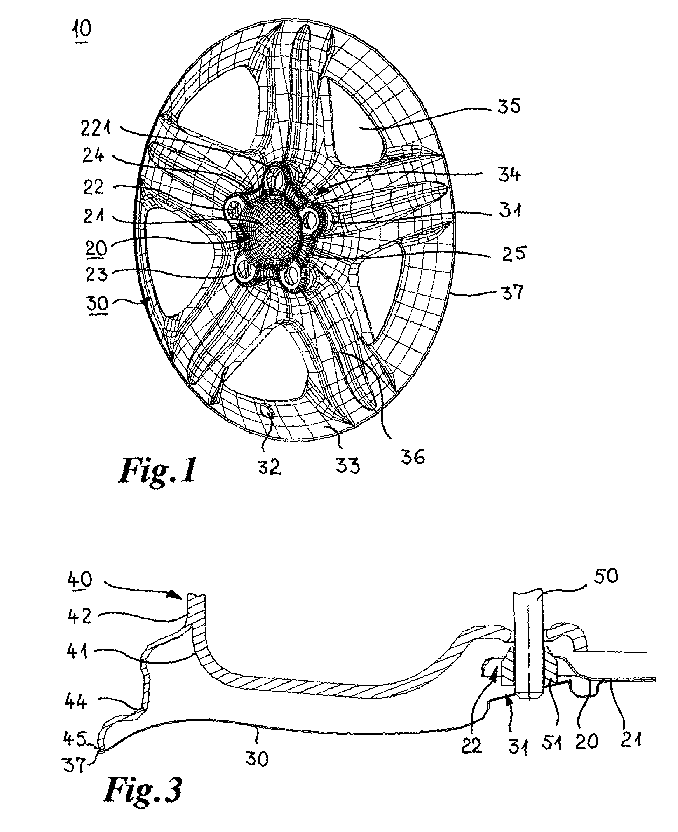

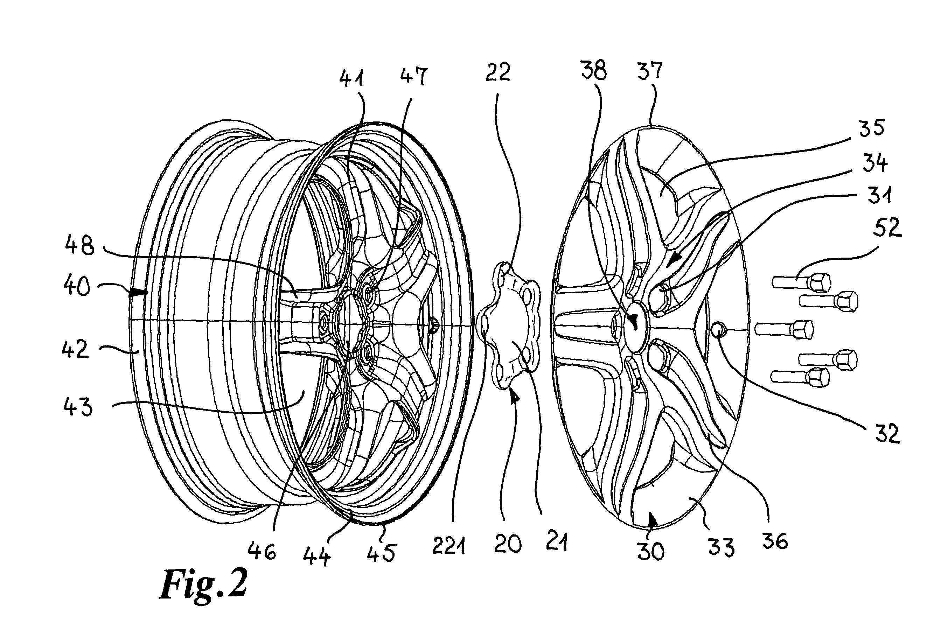

Figure 1 shows a perspective rear view of a first embodiment of a wheel cover 10 according to the invention. The wheel cover comprises an adapter element 20 and a cover element 30. The adapter element 20 is fixed on the cover element 30, for example, by means of spot welding, particularly resistance spot welding. The (not shown) welding spots are arranged in a central cambered region 21 of the adapter element and can be covered from the front side of the wheel cover with a decorative element in the form of a plaque with the emblem of the automobile manufacturer or another plaque after the adapter element and the cover element are connected to one another. This decorative element is not illustrated in Figure 1. The cover element contains a central opening 38 (Figure 2), through which the cambered central region 21 of the adapter element protrudes. This means that the adapter element is circularly fixed on the cover element around this opening 38. The region of the opening 38 may also be closed and the connecting points between the cambered region and this region of the cover element may be shifted closer to the center.

The exploded view according to Figure 2 shows that the adapter element 20 contains a cambered central region 21 that is surrounded by platform-shaped edge mouldings 23 provided with through-openings 22. These edge mouldings are respectively spaced apart from one another by a certain distance. Connecting webs 24 are provided between the individual edge mouldings 23 for connecting the individual edge mouldings to one another. The entire outer edge 25 of the adapter element 20 is bent toward the cover element 30 in the region of the edge mouldings and the connecting webs such that no sharp edges protrude from the rear side of the wheel cover.

Figure 1, in particular, shows that one of the five through-openings, namely the through-opening 221, has a larger diameter than the other through-openings. The cover element 30 also contains through-openings 31 that are aligned with the through-openings 21 in the adapter element 20. All through-openings 31 in the cover element have the same diameter. It would also be possible, in principle, to provide one of these through-openings with a larger diameter than the other through-openings, wherein this larger through-opening is positioned congruently with the through-opening 221 in the adapter element. After a wheel 40 is positioned on a wheel hub in the region of its central opening 46 and loosely fixed thereon by means of a wheel mounting bolt 50 or a wheel screw 52 engaging into an opening 47 in the wheel disk 41, the wheel cover 10 can be installed because the through-opening 221 has such a size that the wheel mounting bolt or wheel screw fits through this through-opening. The remaining wheel mounting bolts or wheel screws are installed and tightened with the specified torque after the wheel cover is properly aligned. The adapter element 20 is positioned in front of the central opening 46 of the wheel disk 41 that serves for mounting the wheel on a wheel hub. The larger through-opening 221 in the adapter element and the at least one through-opening in the cover element have such a diameter that the head and the collar of the first wheel mounting bolt or wheel nut fits through these openings. If the cover element is provided with through-openings that have the same diameter, the dimensions of the through-openings are chosen such that the cover element can be attached over wheel screws or wheel nuts, respectively.

The largest through-opening 221 is arranged opposite of an opening 32 in the edge region 33 of the cover element 30 that serves for leading through a (not-shown) valve to be inserted into the rim 42 of the wheel 40. This makes it possible to always position the wheel cover on a wheel in a precisely fitted fashion.

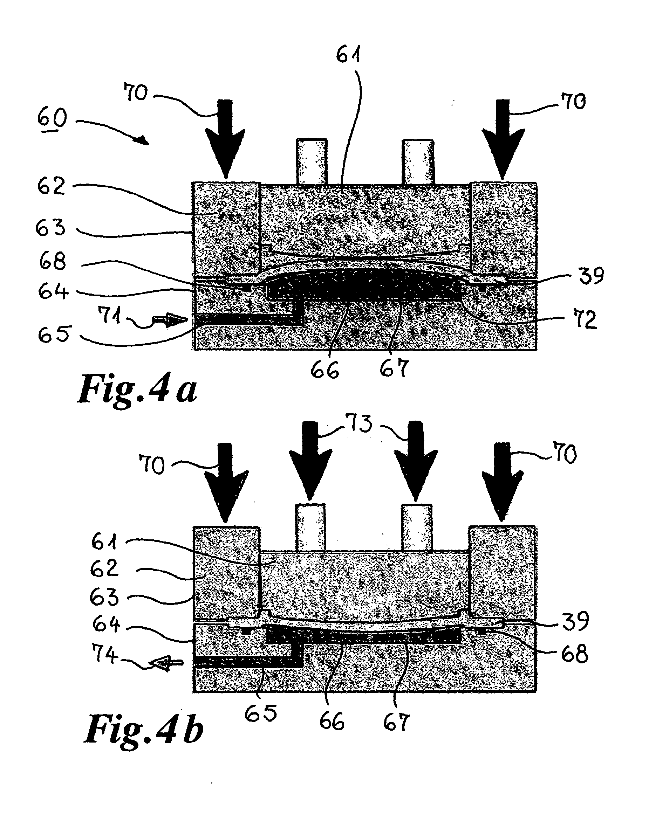

The cover element is manufactured by means of hydroforming as described below with reference to Figures 4a and 4b. In addition to the through-openings 31 that are radially arranged around its center 34, the cover element also contains openings or recesses 35 that are separated from one another by radial webs 36. The radial webs 36 extend between the center and the edge region 33 of the cover element and are shaped in accordance with the shape of radially extending webs 48 of a wheel disk 41, on which the cover element is installed. This is illustrated particularly well in Figure 2. The openings or recesses 43 in the wheel disk are primarily provided for ventilation purposes and not reduced in size or covered by the attached cover element. This means that the ventilation, in particular, of the brake disks is not impaired.

The wheel cover is positioned such that its periphery is radially spaced apart from the rim flange 44 of the wheel 40. This makes it possible to prestress the wheel cover relative to the rim 42 after the wheel mounting bolts 50 are tightened. This reliably prevents the simple detachment of the wheel cover and not only secures the wheel cover from being lost, but also from being stolen. The prestress also makes it possible to prevent fluttering of the wheel cover while driving.

Figure 3 shows a detail of the edge region of the rim 42 with the rim flange 44, the wheel disk 41, the cover element 30, the adapter element 20 and a wheel mounting bolt 50 with a wheel nut 51 screwed thereon.

This figure indicates that the shape of the cover element 30 does not exactly correspond to that of the wheel disk. In order to generate the prestress, a peripheral outer edge 37 of the cover element lies on a peripheral outer edge 45 of the rim flange 44. The cover element does not reproduce the shape of the rim flange, but rather covers this rim flange. The adapter element forms the connection with the wheel disk and bridges the space between the cover element and the wheel disk in the region of the wheel mounting bolts. The through-opening 31 in the cover element 30 according to Figure 3 is very wide in comparison with the diameter of the wheel mounting bolt 50 and the wheel nut 51. Consequently, the wheel mounting bolt and the wheel nut can be easily inserted into this opening in order to mount the wheel cover on the wheel disk. The present invention is not only suitable for use on a wheel that is composed of a rim and a wheel disk, but also on a cast wheel. When used on such a cast wheel, an inner part is covered by the cover element and the peripheral edge 37 of the cover element lies on the peripheral outer edge of the wheel part accommodating the tire.

Figures 4a and 4b show a schematic diagram for elucidating the production of the cover element 30 by means of hydroforming. In this case, a sheet metal blank 39 with a certain contour is initially cut or punched out of a corresponding sheet. The contour is advantageously adapted to that of the finished cover element in order to maintain the trimming work after the forming process at a minimum. The sheet metal blank may be provided with different surface structures, for example, treated by means of polishing, brushing, frosting or another surface treatment method. The sheet metal blank is inserted into the hydraulic press 60. The hydraulic press comprises an upper punch 61 and holding-down appliances 62 that form part of an upper die 63, as well as a lower die 64. The lower die is provided with a supply line 65 for an active medium 66 and with an active medium container 67.

After inserting the sheet metal blank 38 into the hydraulic press, the holding-down appliances 62 are lowered (arrows 70) such that the sheet metal blank is fixed in position within the press. In addition, the edge region of the sheet metal blank held by the holding-down appliances is rendered fluid-tight by means of a draw die 68. Subsequently, the active medium 66 is pumped into the active medium container 67 via the supply line 65 (arrow 71), and the bottom of the sheet metal blank 38 is subjected to pressure (arrows 72) such that it is pre-cambered opposite to the forming direction. The ram 61 is not yet lowered on the sheet metal blank in this step.

Once the preforming process is completed, the ram 61 is lowered (arrows 73) as shown in Figure 4b. The active medium is initially subjected to a relatively low pressure, wherein this pressure is increased, e.g., to 300 bar during the forming process, namely after the ram 61 is die-sunk into the sheet metal blank. The pressure of the active medium prevents the formation of wrinkles in the sheet metal. The sheet metal blank now adjoins the surface of the ram. After being subjected to pressure, the active medium is once again pumped out of the active medium container 67 (arrow 74). The formed sheet metal part in the form of the cover element can be removed from the hydraulic press after raising the ram 61 and the holding-down appliances 62. The peripheral edge of the cover element can be trimmed and doubled over, particularly beaded, after the shaping process. The beaded edge of the cover element is indicated in Figure 3. The openings 35 or recesses are subsequently also cut out, wherein the cut edges are also doubled over or rounded in a different fashion in order to eliminate sharp edges and thusly reduce the risk of injuries, as well as to improve the optical appearance. The bending and beading of the edges is advantageously carried out with methods that do not cause any surface damages.

The cover element preferably consists of metal, particularly steel or stainless steel. The adapter element preferably also consists of steel or stainless steel such that both elements can be easily connected without the risk of the respective surfaces attacking one another, e.g., due to contact corrosion. The adapter element can be produced by means of deep-drawing or a corresponding method. Since the adapter element is not externally visible, scratches or other possible surface damages do not cause any problems with respect to the optical quality control. It would also be conceivable, in principle, to shape the adapter element by means of hydroforming.

In addition to the embodiments of wheel covers that were described above and are illustrated in the figures, the invention also makes it possible to realize numerous other embodiments, in which an adapter element is rigidly or inseparably connected to a cover element of the wheel cover and/or a cover element for at least partially covering the inner part of a wheel is produced by means of hydroforming. The cover element may have any arbitrary shape and size such it can be adapted to the respective part of the wheel, particularly the wheel disk on which it should be installed, analogous to the adapter element. It is possible to provide a plurality of different adapter elements and only a few different types of cover elements. In this case, an adaptation to different lateral shapes of wheels can be achieved with the different adapter elements.

### List of Reference Numerals

- 10: Wheel cover
- 20: Adapter element
- 21: Cambered central region
- 22: Through-opening
- 23: Edge mouldings
- 24: Connecting webs
- 25: Outer edge
- 30: Cover element
- 31: Through-opening
- 32: Valve opening
- 33: Edge region
- 34: Center
- 35: Openings
- 36: Radial webs
- 37: Peripheral outer edge
- 38: Central recess
- 39: Sheet metal blank
- 40: Wheel
- 41: Wheel disk
- 42: Ram
- 43: Ventilation openings
- 44: Rim flange
- 45: Peripheral outer edge
- 46: Central opening for wheel hub
- 47: Openings for wheel mounting bolts
- 48: Web
- 50: Wheel mounting bolt
- 51: Wheel nut
- 52: Wheel screw
- 60: Hydraulic press
- 61: Upper Ram
- 62: Holding-down appliance
- 63: Upper die
- 64: Lower die
- 65: Supply line
- 66: Active medium
- 67: Active medium container
- 68: Drawing die
- 70: Arrow
- 71: Arrow
- 72: Arrow
- 73: Arrow
- 74: Arrow
- 221: Larger through-opening

## Claims

1. A wheel cover (10) of metal for a wheel (40) with a part (42) that accommodates the tire and an inner part (41) arranged within this part, wherein the wheel cover comprises an adapter element (20) for fixing the wheel cover on the inner part (41) and a cover element (30) for at least partially covering the inner part (41),
**characterized in that**
the adapter element (20) is inseparably fixed on the cover element (30).

2. The wheel cover (10) according to Claim 1,
**characterized in that**
the adapter element (20) and the cover element (30) contain through-openings (22, 221, 31) for leading through wheel screws and/or wheel mounting bolts (50), particularly three, four, five or six through-openings.

3. The wheel cover (10) according to Claim 2,
**characterized in that**
at least one through-opening (221) is larger than the other through-openings.

4. The wheel cover (10) according to Claim 3,
**characterized in that**
an opening (32) for leading through a valve of the wheel (40) that can be inserted into the part (42) accommodating the tire is provided in the adapter element (20) and/or the cover element (30).

5. The wheel cover (10) according to Claim 4,
**characterized in that**
the opening (32) for leading through a valve of the wheel (40) that can be inserted into the part (42) accommodating the tire is situated opposite of the largest opening (221) in the adapter element (20) and/or the cover element (30).

6. The wheel cover (10) according to Claim 3, 4 or 5,
**characterized in that**
the largest opening (221) has such dimensions that the head and the collar of a wheel screw or wheel nut (51) fit through the opening.

7. The wheel cover (10) according to one of the preceding claims,
**characterized in that**
openings or recesses (35) are arranged in the wheel cover (10) such that they are essentially aligned with openings or recesses (43) in the inner part (41) of the wheel (40) after the wheel cover (10) is installed on the wheel (40).

8. The wheel cover (10) according to one of the preceding claims,
**characterized in that**
the central region (34) of the cover element (30) contains a depression and/or a recess (38) for accommodating a decorative element.

9. The wheel cover (10) according to one of the preceding claims,
**characterized in that**
a decorative element specified by the customer is or can be fixed in the center of the wheel cover (10)

10. The wheel cover (10) according to Claim 9,
**characterized in that**
the decorative element is attached by means of a plug-type connection, an expansion-type connection, bonding, soldering, clips, at least one mounting element, particularly a screw, a clinch bolt or similar fixing elements.

11. The wheel cover (10) according to one of the preceding claims,
**characterized in that**
at least the cover element (30) of the wheel cover (10) consists of steel, particularly stainless steel, wherein it is particularly preferred that both the cover element (30) and the adapter element (20) consist of steel or stainless steel.

12. The wheel cover (10) according to one of the preceding claims,
**characterized in that**
the wheel cover (10) is provided with one or more different surface structures, wherein the surface, in particular, is at least partially polished, brushed, frosted or otherwise structured.

13. A method for manufacturing a wheel cover (10) according to one of the preceding claims, **characterized in that** the method comprises the following steps:
- producing a sheet metal blank (39) with a predetermined contour,
- forming the sheet metal blank (39) into a cover element (30) by means of hydroforming, and
- connecting a preformed adapter element (20) to the cover element (30) such that the wheel cover (10) is obtained.

14. The method according to Claim 13,
**characterized in that**
the formed cover element (30) is cut to size, particularly punched, along the edges and/or its surface area before it is connected to the adapter element (20).

15. The method according to Claim 14,
**characterized in that**
the peripheral edge (37) of the trimmed cover element (20) is smoothed, in particular, by beading the peripheral edges.

16. The method according to one of Claims 12-15,
**characterized in that**
the adapter element (20) is centrally fixed on the formed and trimmed cover element (30), in particular, by means of one or more soldering or welding spots, a positive connection, particularly rivets, clinching or penetration joining, particularly machine riveting.

17. A cover element (30) for at least partially covering an inner part (41) of a wheel (40), particularly a wheel disk of a vehicle, wherein said cover element is intended for use, in particular, as part of a wheel cover (10) according to one of Claims 1-12,
**characterized in that**
the cover element (30) is manufactured by means of hydroforming.

18. The cover element (30) according to Claim 17,
**characterized in that**
the cover element (30) contains through-openings (31) for leading through wheel screws, wheel mounting bolts (50) or wheel nuts, wherein said through-openings are radially arranged around the center of the cover element.

19. An adapter element (20) for use as part of a wheel cover (10) according to one of Claims 1-12,
**characterized in that**
the adapter element (20) contains a central cambered region (21) as well as through-openings (22) that are radially arranged around this cambered region.

20. The adapter element (20) according to Claim 19,
**characterized in that**
at least one (221) of the through-openings (22) has a larger diameter than the other through-openings.

21. A wheel (40) with a wheel cover (10) according to one of Claims 1-12,
**characterized in that**
the wheel cover (10) is or can be fixed on the wheel (40) with a prestress, wherein the wheel cover at least partially adjoins the wheel in its edge region (10).

22. The wheel (40) according to Claim 21,
**characterized in that**
the wheel cover (10) is arranged such that its periphery is radially spaced apart from the outer edge (44) of the wheel (40), and **in that** the prestress is generated due to the installation on the wheel (40) by means of wheel mounting bolts (50) or wheel screws.
